# FASCICULE DE BREVET EUROPEEN

(11) **EP 2 835 784 B1**
(45) Date de publication et mention de la délivrance du brevet: **18.05.2016**
(21) Numéro de dépôt: 14161336.4
(22) Date de dépôt: 24.03.2014
(51) Int. Cl.: G06T 7/00, B65G 43/08, G06M 7/08, G06T 7/20, B07C 3/14

(54) **Système de convoyage comportant un suivi des objets convoyés par imagerie et capteurs virtuels**
Fördersystem mit Verfolgung beförderter Objekte basierend auf Bild- und virtuellen Sensoren
Conveyor system comprising image and virtual sensor based conveyed object tracking

(30) Priorité: 07.08.2013 FR 1357852
(43) Date de publication de la demande: 11.02.2015
(73) Titulaire: Solystic, 92220 Bagneux (FR)
(72) Inventeur: Ghezal, Mohammed, 38210 TULLINS (FR)
(74) Mandataire: Prugneau, Philippe

(56) Documents cités:
- EP-A1- 2 107 336
- WO-A1-2011/036384
- Corinne Saulnier: "Addition Sums - SOSi by Solystic", PRODUCTS AND SERVICES, 1 mars 2011 (2011-03-01), pages 1-2, XP055095496, Extrait de l'Internet: URL:http://www.solystic.com/medias/fichier s/postal_technology_international_addition _sums.pdf [extrait le 2014-01-09]
- "Future Postal Solutions SoSi | Process Engineering | Sizing | Modelling & Simulation", , 1 janvier 2011 (2011-01-01), pages 1-1, XP055095490, Extrait de l'Internet: URL:http://www.solystic.com/medias/fichier s/sosi1.pdf [extrait le 2014-01-09]
- SVEN DOMINKA ET AL: "Prozessgutsimulation und Anlagenteilsimulation zur Verkürzung der Inbetriebnahme", AUTOMATISIERUNGSTECHNISCHE PRAXIS - ATP, OLDENBOURG INDUSTRIEVERLAG, MUNCHEN, DE, vol. 49, no. 3, 1 March 2007 (2007-03-01), pages 55-60, XP002591965, ISSN: 0178-2320

## Description

### Domaine technique

L'invention concerne les systèmes électromécaniques de convoyage et notamment un système de convoyage comportant un convoyeur adapté pour déplacer des objets le long d'un certain trajet de convoyage, au moins un capteur de passage prévu pour détecter le passage d'un objet en mouvement sur le convoyeur en un certain point du trajet de convoyage et fournir en réponse à la détection du passage de cet objet un signal de détection de passage à une unité de contrôle/commande à travers un bus de terrain laquelle en réponse au signal de détection de passage fournit un signal de commande pour un actionneur électro mécanique du convoyeur à travers ledit bus de terrain, par exemple un bus de terrain temps réel tel que "FIP" ou "EtherCAT".

### Technique antérieure

De façon connue, dans une machine de tri postal, le convoyeur de tri du type convoyeur à bandes apte à déplacer par pincement des envois en série sur chant est pourvu d'une multitude de capteurs et d'actionneurs.

Les capteurs comprennent des capteurs de passage du type détecteurs inductifs ou à laser ou encore photo détecteurs qui sont répartis sur tout le chemin de convoyage des envois dans le convoyeur de tri et qui produisent chacun un signal de détection de passage quand un envoi coupe le faisceau du capteur de passage.

Par exemple le document EP 2107336 mentionne des capteurs de passage pour contrôler la distance de séparation entre les objets sur un convoyeur.

Les actionneurs peuvent être des volets d'aiguillage qui dévient chacun le trajet d'un envoi vers une sortie de tri de la machine par exemple.

Les signaux des capteurs de passage sont envoyés vers un automate dans une unité de contrôle/commande à travers un réseau de terrain.

En réponse à la réception des signaux de détection provenant des capteurs, l'automate produit des signaux de commande pour un ou des actionneurs dans la machine de tri. Ces signaux de commande transitent aussi par le bus de terrain.

Ces capteurs de passage permettent à l'automate de suivre le déplacement des envois dans le convoyeur de tri et donc de réaliser le processus de tri automatique des envois dans les sorties de tri de la machine.

Le spectre du courrier qui est traité automatiquement dans ces machines de tri postal a tendance à s'élargir ce qui fait que des objets très différents peuvent circuler dans un tel convoyeur de tri. Ainsi, les fabricants de ces machines de tri sont amenés à modifier les convoyeurs de tri pour intégrer de nouveaux capteurs ou changer l'emplacement de ces capteurs par exemple pour faire des nouvelles ségrégations d'envois ce qui engendre des coûts extrêmement importants de développement et de test de bon fonctionnement des machines de tri.

De façon analogue, si des fonctionnalités supplémentaires, comme la mesure des dimensions des envois ou la pesée automatique à partir de ces mesures de dimensions d'envoi, doivent être intégrées dans une machine de tri postal existante, cela engendre encore une modification très importante de la machine.

Il existe donc un besoin de simplifier l'intégration de ces capteurs dans un convoyeur de tri postal et de façon plus générale dans un convoyeur du type électro mécanique comme indiqué plus haut.

A cet effet, l'invention a pour objet un système de convoyage comportant un convoyeur adapté pour déplacer des objets le long d'un certain trajet de convoyage, au moins un capteur de passage prévu pour détecter le passage d'un objet en mouvement sur le convoyeur en un certain point du trajet de convoyage et fournir en réponse à la détection du passage de cet objet un signal de détection de passage à une unité de contrôle/commande à travers un bus de terrain laquelle en réponse au signal de détection de passage fournit un signal de commande pour un actionneur électro mécanique du convoyeur à travers ledit bus de terrain, caractérisé en ce qu'il comprend en outre un système de suivi de mouvement apte à produire des images numériques comprenant les objets en mouvement dans le convoyeur, en ce que ledit capteur de passage est un capteur virtuel représenté dans une modélisation numérique en 3D du convoyeur, et en ce qu'il comporte un émulateur pour transformer lesdites images produites par le système de suivi de mouvement en des objets modélisés en 3D et pour détecter des interactions spatiales entre les objets modélisés en 3D et le capteur virtuel représenté dans la modélisation numérique en 3D du convoyeur et à partir de ces détections produire lesdits signaux de détection de passage qui sont fournis à ladite unité de contrôle/commande à travers ledit bus de terrain.

L'idée à la base de l'invention est donc de remplacer les capteurs physiques de passage traditionnels par un système de prise d'images tout en maintenant l'environnement traditionnel du bus de terrain temps réel pour la gestion des signaux de détection des capteurs et des signaux de commande des actionneurs.

Ces capteurs virtuels peuvent être implémentés dans la modélisation en 3D du convoyeur de tri par exemple avec un outil de dessin assistée par ordinateur (outil de DAO) ou encore avec un outil de simulation comme l'outil de simulation appelé "SOSI" de la société "SOLYSTIC" qui est apte à modéliser le comportement d'une machine de tri en 3D avec des envois en mouvement selon une approche de type "serious game".

On comprend donc que dans une machine de tri postal avec un convoyeur de tri du type électromécanique selon l'invention, il n'y a plus de capteurs physiques en tant que tels mais un émulateur programmable qui produit à la place des signaux de détection pour l'unité de contrôle/commande de la machine de tri postal.

Cet émulateur peut se présenter sous la forme d'une unité de traitement de données programmable qui est programmée pour transformer des images numériques comprenant des envois en mouvement dans un convoyeur de tri prises depuis une ou des caméras placées au dessus du convoyeur de tri, en signaux de détection de passage de ces envois devant des capteurs virtuels placés sur le chemin de convoyage des envois.

Selon une particularité du système de convoyage selon l'invention, l'émulateur comprend un moyen pour extraire dans les images numériques en 2D comprenant un objet le contour de cet objet, un moyen pour transformer le contour d'un objet en une modélisation numérique de l'objet en 3D et un moyen pour détecter des intersections des segments de la représentation 3D du capteur virtuel d'un coté et des segments de la représentation en 3D de l'envoi de l'autre coté..

Selon encore une autre particularité du système de convoyage selon l'invention, le système de suivi peut comprendre une caméra placée au dessus du convoyeur ou plusieurs caméras espacées l'une de l'autre le long du trajet de convoyage ce qui permet d'affiner la représentation en 3D des objets suivis.

### Présentation sommaire des dessins

La présente invention sera mieux comprise et d'autres avantages apparaîtront à la lecture de la description qui suit et des dessins annexés dans lesquels :
- la figure 1 illustre très schématiquement une machine de tri postal avec un système de suivi des envois par imagerie et capteurs virtuels selon l'invention.
- la figure 2 illustre les traitements d'images numériques réalisés par l'émulateur du système de suivi par imagerie pour produire des signaux de détection de passage.

### Description des modes de réalisation

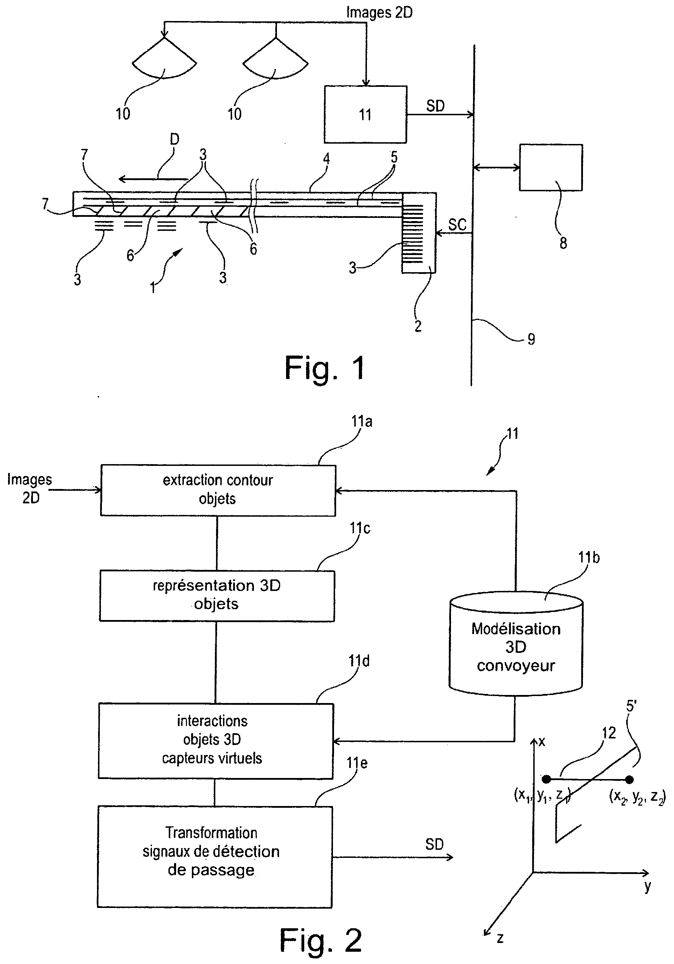

Sur la figure 1, on a représenté à titre d'exemple un système de convoyage d'envois dans une machine de tri postal 1 mais l'invention peut s'appliquer à d'autres types d'objets.

La machine de tri postal comporte un dépileur 2 qui sérialise des envois postaux 3 disposés en pile sur chant dans le magasin d'alimentation du dépileur.

Un convoyeur de tri 4 du type électromécanique, ici à double bandes 5, disposé en aval du dépileur 2, déplace par pincement entre les bandes 5 les envois 3 en série sur chant suivant un trajet de convoyage qui s'étend principalement suivant la direction D le long d'une pluralité de sorties de tri 6 de la machine 1.

On a illustré dans le convoyeur de tri 4 un ensemble d'actionneurs électromécaniques 7 qui sont par exemple des volets d'aiguillage pour aiguiller les envois sélectivement vers les sorties de tri 6 en fonction de l'adresse de distribution de chaque envoi qui est reconnue automatiquement dans la machine de tri 1 par exemple par OCR.

Le convoyeur de tri 4 est piloté en temps réel par un automate programmable enregistré dans une unité de contrôle/commande 8.

L'unité de contrôle/commande 8 est reliée aux actionneurs 7 du convoyeur de tri 4 par un bus de terrain 9.

L'unité de contrôle/commande 8 produit des signaux de commande SC pour les actionneurs 7 en fonction de l'avancement du processus de tri des envois et de la position relative de ces envois nt dans le convoyeur de tri 4.

Selon l'invention, le suivi des envois 3 dans le convoyeur de tri 4 est réalisé par un système d'imagerie qui peut comprendre une ou plusieurs caméras telles que 10 qui filme chacune la scène au dessus du convoyeur de tri comprenant les envois 3 en mouvement dans le convoyeur.

Les images numériques en 2D produites par chaque caméra 10 à une fréquence vidéo de 25 images/seconde par exemple sont transformées dans un émulateur 11 selon l'invention en des signaux SD de détection du passage des envois devant des capteurs de passage qui sont ici des capteurs virtuels non traditionnels du type capteur inductifs ou analogues.

Les signaux SD de détection de passage produits par l'émulateur 11 sont envoyés à l'unité de contrôle/commande 8 à travers le bus de terrain 9.

Selon l'invention, le suivi du mouvement des envois 3 dans le convoyeur de tri 4 se fait donc à travers des capteurs virtuels qui sont représentés de façon numérique dans une modélisation numérique en 3D du convoyeur de tri.

Cette modélisation numérique en 3D du convoyeur de tri peut être obtenue par DAO ou équivalent.

L'émulateur 11 se présente par exemple sous la forme d'une unité de traitement de données programmable.

La figure 2 illustre de façon schématique les blocs de traitement de données dans l'émulateur 11.

Les images numériques en 2D comprenant un ou plusieurs envois en mouvement dans le convoyeur de tri 4 sont d'abord traitées dans un module 11a d'extraction de contour qui est apte à extraire le contour numérique de chaque envoi vu de dessus détecté dans l'image.

Pour dissocier un envoi dans la scène visualisée par une caméra 10, le module 11a peut exploiter une image de fond préalablement enregistrée dans une base de données 11 b qui représente le convoyeur de tri 4 vu de dessus en l'absence de tout envoi postal 3 dans le convoyeur de tri 4.

Par différenciation entre une image en 2D courante produite par la caméra 10 et l'image de fond, le module 11 b peut récupérer seulement le profil vu de dessus des envois compris dans l'image courante.

A partir du résultat du traitement dans le module 11 a, un module 11 c de l'émulateur reconstitue une représentation en 3D du ou des envois présents dans l'image courante, par exemple après un traitement de saturation (remplissage de contour fermé) et de filtrage passe bande qui permet d'extraire le contour numérique fermé de chaque envoi.

Puis dans le module 11 c, on modélise une représentation en 3D de chaque envoi à partir de ces contours numériques extraits des images courantes en exploitant des paramètres de description de la ou des caméras 10.

Ces paramètres de description sont enregistrés dans la base de données 11 b. Ils définissent entre autres la position spatiale de chaque caméra 10 par rapport au convoyeur de tri 4, le point de vue de la caméra, l'orientation du point de vue de la caméra, l'ouverture de l'angle de vue de la caméra, les limites de vision de la caméra ("frustum").

Tous ces paramètres permettent d'obtenir de façon connue une matrice de vue Mv et une matrice de projection Mp avec lesquelles on peut transformer dans le module 11 c les points de la représentation en 2D du contour numérique d'un envoi en points d'une représentation numérique en 3D de l'envoi selon la relation : Point 2D = Point 3D x Mv x Mp

Si le système de suivi par imagerie comporte plusieurs caméras 10 espacées entre elles sur le trajet de convoyage, le module 11 c peut être apte à reconstruire de façon plus fine le gabarit en 3D (avec une hauteur précise) de chaque envoi suivi dans le convoyeur de tri.

Sur la figure 2, on a symbolisé la modélisation en 3D du convoyeur enregistrée dans la base 11 b par une représentation 5' des bandes de convoyage dans un repère orthonormé d'axes xyz. On a aussi illustré un capteur de passage virtuel 12 dans cette modélisation numérique en 3D du convoyeur, ce capteur de passage virtuel étant ici représenté par un segment disposé en un point du trajet de convoyage dont la position relative spatiale est défini par les coordonnées (x1, y1, z1) et (x2,y2,z2).

Suite à quoi, dans un module 11 d de l'émulateur, on détecte les interactions spatiales entre les représentations en 3D des envois et les capteurs virtuels 12 représentés dans la modélisation en 3D du convoyeur qui est stockée dans la base de données 11 b.

Ces interactions spatiales peuvent être identifiées par exemple par détection d'intersections de segments des capteurs virtuels et les faces des maillages qui constituent les modélisations en 3D indiquées ci-dessus.

Dans le module 11 e de l'émulateur représenté sur la figure 2, le résultat des détections des interactions spatiales est transformé en signaux SD de détection de passage devant un capteur de passage du convoyeur de tri. Chaque signal SD est adapté par le module 11 e pour transiter dans le bus de terrain 9 comme si c'était un signal produit par un capteur de passage physique de sorte que l'automate dans l'unité de contrôle/commande 8 est en quelque sorte dupé par l'émulateur 11.

Avec le système de suivi par imagerie selon l'invention raccordé par un bus de terrain à l'automate du processus de tri, les fabricants de machines de tri postal peuvent plus facilement modifier l'emplacement des capteurs de passage des envois dans le convoyeur de tri sans modification physique du convoyeur de tri.

En plus, la solution selon l'invention supprime les interventions manuelles d'entretien des capteurs sur le convoyeur, notamment les opérations de nettoyage des capteurs pour enlever la poussière produite par les envois en mouvement dans le convoyeur.

L'invention peut s'appliquer à d'autres types de convoyeur électromécanique, par exemple des convoyeurs à plateaux, à bandes porteuses transversales, à rouleaux ou à tapis ou encore à chaîne. L'invention peut également s'appliquer aux objets de type colis ou paquets que convoient habituellement ces autres types de convoyeurs.

## Revendications

1. Système de convoyage comportant un convoyeur (4) adapté pour déplacer des objets (3) le long d'un certain trajet de convoyage, au moins un capteur de passage prévu pour détecter le passage d'un objet en mouvement sur le convoyeur en un certain point du trajet de convoyage et fournir en réponse à la détection du passage de cet objet un signal de détection de passage (SD) à une unité de contrôle et commande (8) à travers un bus de terrain (9) laquelle en réponse au signal de détection de passage fournit un signal de commande pour un actionneur électro mécanique (7) du convoyeur à travers ledit bus de terrain, **caractérisé en ce qu'**il comprend en outre un système (10) de suivi de mouvement apte à produire des images numériques comprenant les objets en mouvement dans le convoyeur, **en ce que** ledit capteur de passage est un capteur virtuel (12) représenté dans une modélisation numérique en 3D du convoyeur, et **en ce qu'**il comporte un émulateur (11) pour transformer lesdites images produites par le système de suivi de mouvement en des objets modélisés en 3D et pour détecter des interactions spatiales entre lesdits objets en mouvement et ledit capteur virtuel par des intersections entre des segments desdits objets modélisés en 3D et un segment disposé audit certain point dudit trajet de convoyage de la représentation 3D dudit capteur virtuel représenté dans la modélisation numérique en 3D du convoyeur et à partir de ces détections produire lesdits signaux de détection de passage qui sont fournis à ladite unité de contrôle et commande à travers ledit bus de terrain.

2. Système selon la revendication 1, **caractérisé en ce que** l'émulateur comprend un moyen (11a) pour extraire dans les images numériques en 2D comprenant un objet le contour de cet objet, un moyen (11 b) pour transformer le contour d'un objet en une modélisation numérique de l'objet en 3D et un moyen (11c) pour détecter lesdites intersections desdits segments de la représentation 3D du capteur virtuel d'un côté et desdits segments de la représentation en 3D de l'envoi de l'autre côté.

3. Système selon la revendication 2, **caractérisé en ce que** le système de suivi comporte plusieurs caméras numériques (10) placées au dessus du convoyeur et espacées l'une de l'autre le long du trajet de convoyage.

4. Machine de tri postal, **caractérisée en ce qu'**elle comprend un système de convoyage selon l'une des revendications précédentes.

## Patentansprüche

1. Fördersystem, umfassend einen Förderer (4), der eingerichtet ist, um Gegenstände (3) entlang eines bestimmten Förderwegs zu bewegen, wenigstens einen Durchlaufsensor, der vorgesehen ist, um den Durchlauf eines Gegenstands in Bewegung auf dem Förderer an einem bestimmten Punkt des Förderwegs zu erfassen und als Reaktion auf das Erfassen des Durchlaufs dieses Gegenstands über einen Feldbus (9) ein Durchlauferfassungssignal (SD) an eine Kontroll- und Steuereinheit (8) zu senden, die als Reaktion auf das Durchlauferfassungssignal ein Steuersignal für ein elektromechanisches Stellglied (7) durch den Feldbus des Förderers ausgibt, **dadurch gekennzeichnet, dass** es außerdem ein System (10) zur Bewegungsverfolgung umfasst, das geeignet ist, um digitale Bilder zu erzeugen, die die Gegenstände in Bewegung in dem Förderer umfassen, dass der Durchlaufsensor ein virtueller Sensor (12) ist, der in einem digitalen 3D-Modell des Förderers dargestellt ist, und dass es einen Emulator (11) umfasst, um die von dem System zur Bewegungsverfolgung erzeugten Bilder in 3D-modellierte Gegenstände umzuwandeln und um räumliche Interaktionen zwischen den Gegenständen in Bewegung und dem virtuellen Sensor durch Überschneidungen zwischen Segmenten der 3D-modellierten Gegenstände und einem Segment, das an dem bestimmten Punkt des Förderwegs der 3D-Darstellung des virtuellen Sensors angeordnet ist, der in dem digitalen 3D-Modell des Förderers dargestellt ist, zu erfassen und ausgehend von diesen Erfassungen die Durchlauferfassungssignale zu erzeugen, die über den Feldbus an die Kontroll- und Steuereinheit geliefert werden.

2. System nach Anspruch 1, **dadurch gekennzeichnet, dass** der Emulator ein Mittel (11a) umfasst, um aus den digitalen 2D-Bildern, die einen Gegenstand umfassen, den Umriss dieses Gegenstands zu extrahieren, und ein Mittel (11 b), um den Umriss eines Gegenstands in ein digitales Modell des 3D-Gegenstandes umzuwandeln, und ein Mittel (11c), um die Überschneidungen zwischen den Segmenten der 3D-Darstellung des virtuellen Sensors einerseits und den Segmenten der 3D-Darstellung der Sendung andererseits zu erfassen.

3. System nach Anspruch 2, **dadurch gekennzeichnet, dass** das System zur Verfolgung mehrere Digitalkameras (10) umfasst, die über dem Förderer angeordnet sind und entlang des Förderwegs voneinander beabstandet sind.

4. Postsortiermaschine, **dadurch gekennzeichnet, dass** sie ein Fördersystem nach einem der vorhergehenden Ansprüche umfasst.

## Claims

1. A conveyor system including a conveyor (4) adapted to move articles (3) along a certain conveyor path, at least one pass sensor designed to detect an article in motion on the conveyor going past at a certain point of the conveyor path and to respond to a detection of said article going past by delivering a pass detection signal (SD) to a monitoring and control unit (8) via a field-bus (9), which monitoring and control unit responds to the pass detection signal by delivering a control signal for an electromechanical actuator (7) of the conveyor via said field-bus, said conveyor system being **characterized in that** it further comprises a movement tracking system (10) suitable for generating digital images containing the articles in motion in the conveyor, **in that** said pass sensor is a virtual sensor (12) represented in a 3D digital model of the conveyor, and **in that** it includes an emulator (11) for transforming said images generated by the movement tracking system into 3D-modeled articles and for detecting the 3D interactions between said articles in motion and said virtual sensor by intersections between segments of said 3D-modeled articles and a segment arranged at said certain point of said conveyor path of the 3D representation of said virtual sensor represented in the 3D digital model of the conveyor, and on the basis of such detections, for generating said pass detection signals that are delivered to said monitoring and control unit via said field-bus.

2. A system according to claim 1, **characterized in that** the emulator comprises means (11a) for extracting the outline of an article from 2D digital images containing said article, means (11b) for transforming the outline of an article into a 3D digital model of the article, and means (11c) for detecting said intersections firstly of said segments of the 3D representation of the virtual sensor and secondly of said segments of the 3D representation of the mailpiece.

3. A system according to claim 2, **characterized in that** the tracking system includes a plurality of digital cameras (10) placed above the conveyor and spaced apart from one another along the conveyor path.

4. A postal sorting machine **characterized in that** it comprises a conveyor system according to any preceding claim.
